# EUROPÄISCHE PATENTSCHRIFT

(11) **EP 0 396 913 B1**
(45) Veröffentlichungstag und Bekanntmachung des Hinweises auf die Patenterteilung: **27.10.1993**
(21) Anmeldenummer: 90106653.0
(22) Anmeldetag: 06.04.1990
(51) Int. Cl.: B23Q 3/155, B23Q 3/157

(54) **Werkzeugwechsler für programmgesteuerte Werkzeugmaschinen**
Tool exchanger for machine-tools
Changeur d'outils pour machines-outils

(30) Priorität: 09.05.1989 DE 8905795 U
(43) Veröffentlichungstag der Anmeldung: 14.11.1990
(73) Patentinhaber: MAHO Aktiengesellschaft, D-87459 Pfronten (DE)
(72) Erfinder: Wehrmeister, Gerhard, D-8960 Kempten (DE)
(74) Vertreter: Beetz & Partner Patentanwälte

(56) Entgegenhaltungen:
- EP-A- 0 291 828
- DE-A- 3 017 613
- DE-A- 3 042 768
- DE-B- 1 477 501

## Beschreibung

Die Erfindung betrifft einen Werkzeugwechsler für programmgesteuerte Werkzeugmaschinen der im Oberbegriff des Patentanspruchs 1 angegebenen Art. Ein derartiger Werkzeugwechsler ist aus der DE-B- 1477 501 bekannt.

Durch die Verwendung von Doppelgreifern in Werkzeugwechselsystemen ist ein Werkzeugwechsel mit einem einzigen Transportvorgang zwischen einem Werkzeugmagazin und einer Bearbeitungsspindel möglich. Dadurch ergeben sich gegenüber Einfachgreifern deutlich verringerte Werkzeugwechselzeiten, da diese jeweils zuerst das alte Werkzeug im Werkzeugmagazin ablegen müssen, bevor sie ein neues Werkzeug zur Arbeitsspindel transportieren können.

Aus der DE-B-1 477 501 ist bereits ein gattungsgemäßer Werkzeugwechsler für eine Werkzeugmaschine mit einer horizontalen Arbeitsspindel bekannt, der zwei diametral gegenüberliegende, um 180° schwenkbare Werkzeuggreifer aufweist, so daß die Entnahme eines neuen Werkzeuges aus dem Werkzeugmagazin und der Transport des Werkzeuges in eine spindelnahe 8ereitschaftsposition bereits während der Bearbeitungszeit mit dem vorhergehenden Werkzeug erfolgen kann. Ein wesentlicher Nachteil dieser Ausführung besteht darin, daß für jeden Werkzeuggreifer eine eigene voneinander unabhängige Betätigungsvorrichtung vorgesehen sein muß, wobei sich in Verbindung mit dem großen Schwenkwinkel eine sehr aufwendige und platzraubende Konstruktion ergibt.

Bei einem anderen, aus der DE-A- 30 17 613 bekannten Werkzeugwechsler für Werkzeugmaschinen mit einer an einem drehbaren Winkelkopf angeordneten Arbeitsspindel ist ein Doppelgreifer an einem Transportarm schwenkbar gelagert, um wahlweise die eine oder andere Arbeitsspindel zu bedienen. Zu diesem Zweck ist der Transportarm parallel und quer zur Spindelachse verschiebbar sowie um eine weitere Achse verdrehbar gelagert. Die zur Bedienung der Arbeitsspindel in den verschiedenen Drehstellungen des Winkelkopfes erforderlichen Mechanismen sind technisch aufwendig und beanspruchen einen erheblichen Raum.

Aufgabe der Erfindung ist es, einen Werkzeugwechsier für programmgesteuerte Werkzeugmaschinen mit zwei zueinander versetzten Werkzeuggreifern zu schaffen, der schnellere Werkzeugwechsel an einer horizontalen bzw. vertikalen Arbeitsspindel ermöglicht und bei konstruktiv einfacher Ausbildung nur einen geringen Platz beansprucht.

Diese Aufgabe wird durch die Merkmale des Anspruchs 1 gelöst.

Aufgrund der erfindungsgemäßen Ausgestaltung der Verriegelung, insbesondere der Verbindung zwischen Kolbenstange des Hydraulikzylinders und Stellglied wird erreicht, daß die Klemmwirkung bei dem Werkzeuggreifer in Standby-Position trotz einer hydraulischen Betätigung in Öffnungsrichtung und einer damit verbundenen Bewegung der Kolbenstange erhalten bleibt. Somit ist nur eine einzige Druckmittelzufuhr in Form von Bohrungen und Ringkanälen erforderlich, was einen wartungsarmen und störungsfreien Betrieb bei vereinfachter Herstellung ermöglicht.

Bei einer Ausgestaltung der Erfindung preßt das federbelastete Druchstück Stellglied seitlich ausgebildete schräge Verriegelungsflächen so gegen Verriegelungsansätze an den Greiferarmen, daß eine Keilwirkung erzielt wird und damit eine Klemmung erfolgt.

Gemäß einer zweckmäßigen Weiterbildung sind die beiden Werkzeuggreifer um einen spitzen Winkel zueinander versetzt angeordnet und weisen in bezug auf die Schwenkachse eine geringe Schwenkarmlänge auf. Dadurch wird zusätzlich zu einem schnelleren Werkzeugwechsel erreicht, daß die aufgrund der Massenbeschleunigung und -verzögerung beim Werkzeugwechsel auf die Transportvorrichtung einwirkenden Kräfte beschränkt sind. Weitere zweckmäßige Ausgestaltungen der Erfindung sind in den Unteransprüchen angegeben.

Im folgenden werden Ausführungsbeispiele des erfindungsgemäßen Werkzeugwechslers anhand der Zeichnung im einzelnen beschrieben. Es zeigen:
- Fig. 1: eine Draufsicht auf den an einem Tragarm eines Werkzeugwechslers montierten Tragkörper und die Traghalterung mit den daran angeordneten Werkzeuggreifern;
- Fig. 2: eine teilgeschnittene Seitenansicht des Tragkörpers und der Traghalterung nach Fig. 1;
- Fig. 3: eine Draufsicht des Tragkörpers nach Fig. 1;
- Fig. 4: eine teilgeschnittene Draufsicht der Traghalterung nach Fig. 1 mit den beiden Werkzeuggreifern;
- Fig. 5: den Tragkörper und die Traghalterung nach Fig. 1 im Schnitt B-B in Fig. 1;
- Fig. 6: einen vergrößerten Teilschnitt der Klemmvorrichtung entlang der Linie A-A in Fig. 4 und
- Fig. 7: einen anderen Tragkörper in Draufsichth

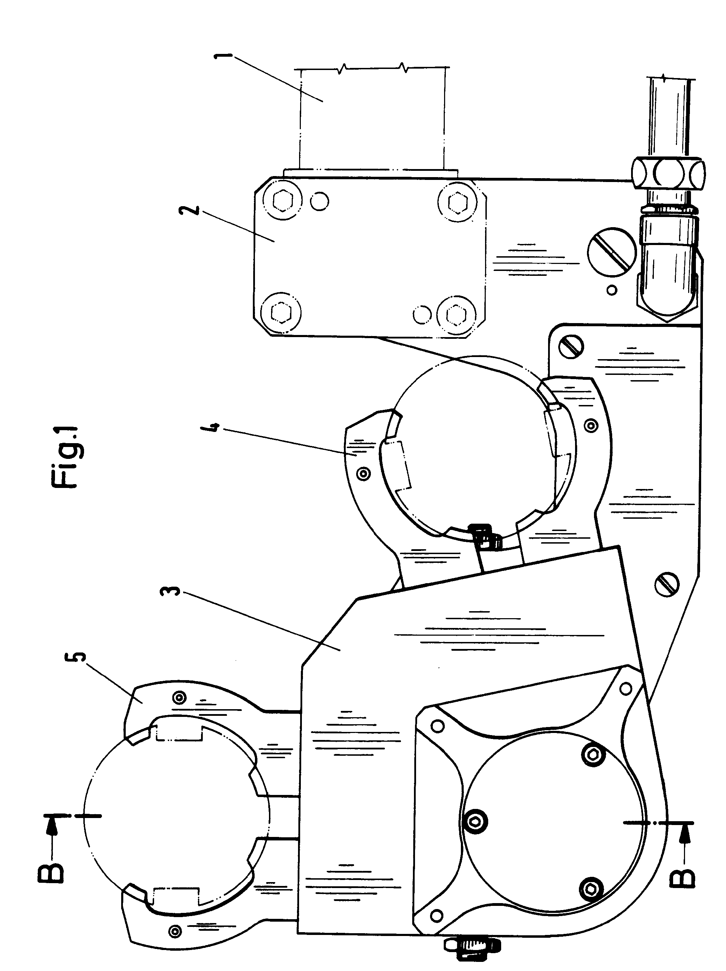

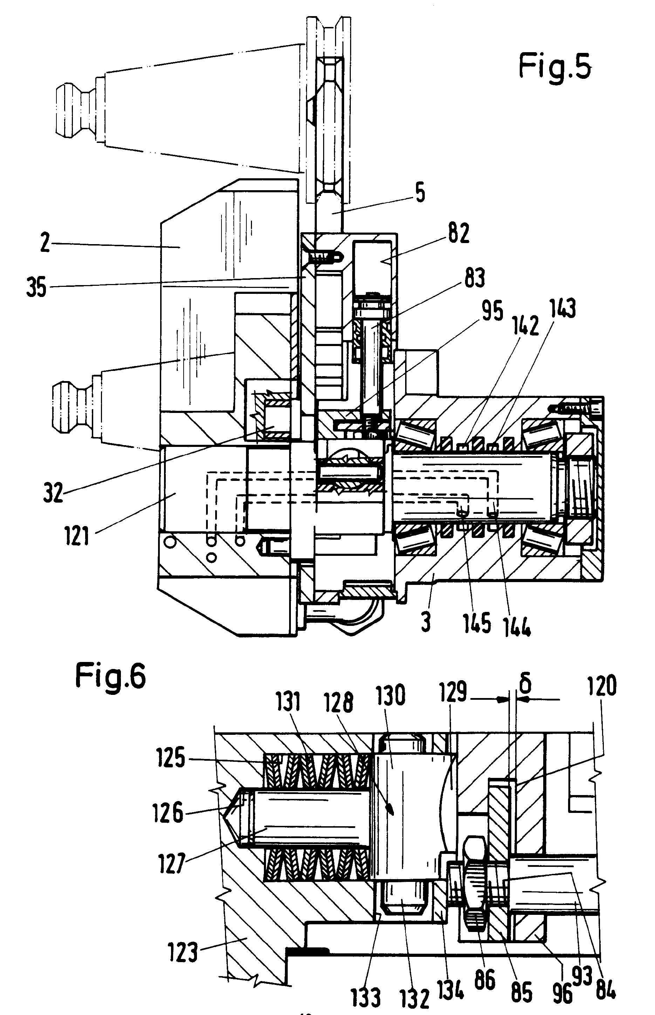

Der Werkzeugwechsler nach Fig. 1 umfaßt einen am Ende eines Tragarms 1 verdrehbar montierten plattenförmigen Tragkörper 2, eine an dessen Unterseite befestigte Traghalterung 3, sowie zwei um einen spitzen Winkel versetzt angeordnete Werkzeuggreifer 4, 5. Der Tragarm 1 ist Teil einer Transportvorrichtung, die eine Bewegung in mehreren Achsen zwischen der Übergangsstation eines Werkzeugmagazins und der horizontalen oder vertikalen Arbeitsspindel ausführt. Die Traghalterung 3 ist auf einem fest mit dem Tragkörper 2 verbundenen Bolzen (121) drehbar gelagert (siehe Fig. 5).

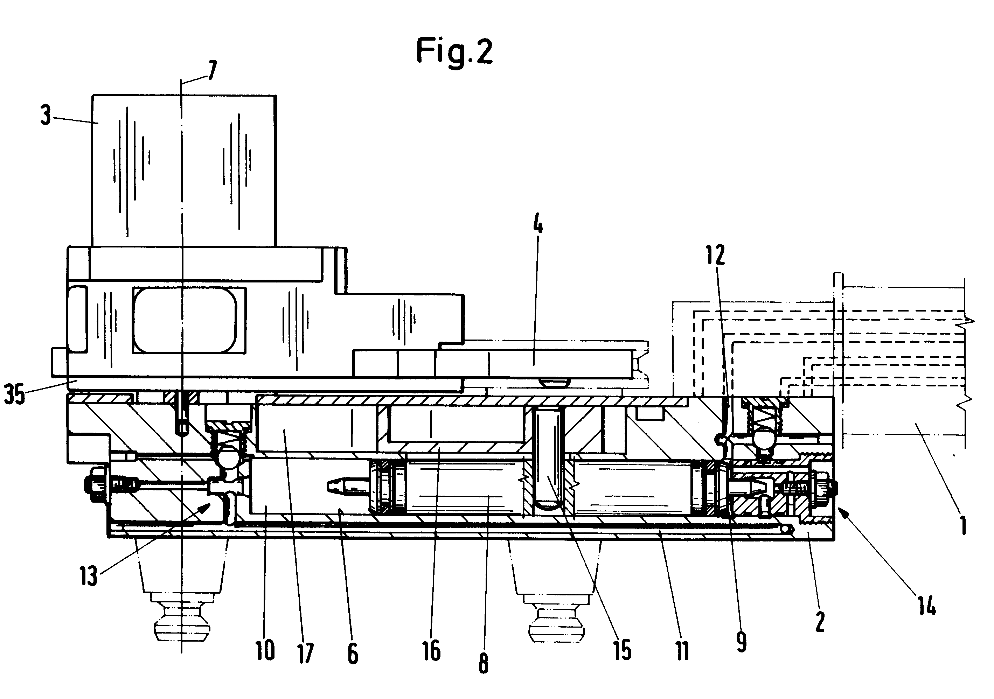

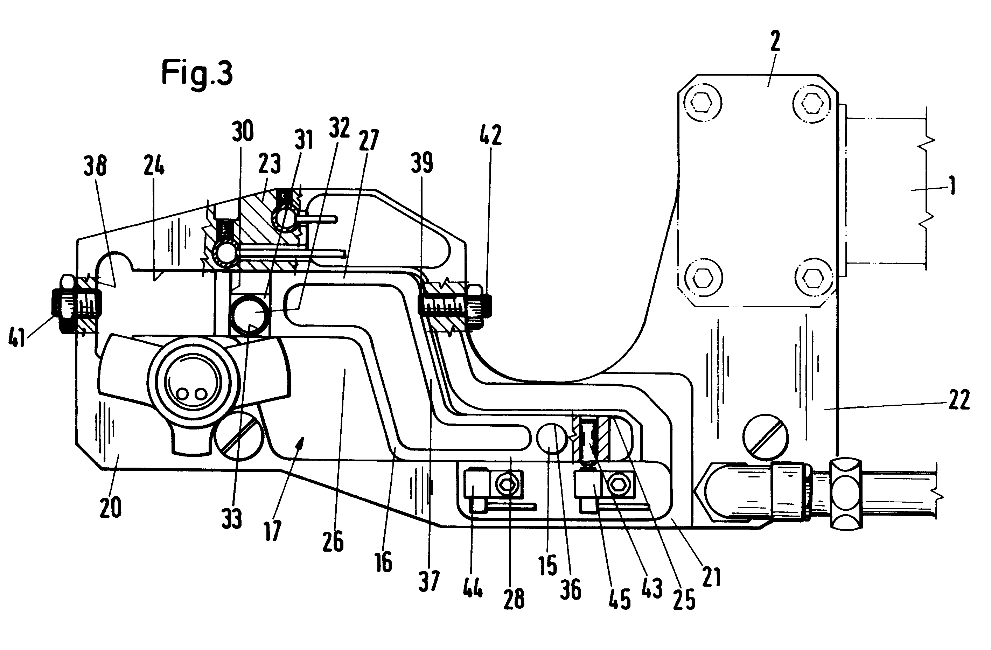

Wie insbesondere aus Fig. 2 ersichtlich, ist im unteren Teil des Tragkörpers 2 ein Hydraulikzylinder 6 angeordnet, dessen Längsachse senkrecht zur Schwenkachse 7 der Traghalterung 3 verläuft. Die Druckmittelversorgung der rechts und links einer Kolbenstange 8 angeordneten Arbeitskammern 9, 10 erfolgt über Bohrungen 11, 12, welche im Tragkörper 2 angeordnet sind. An den beiden Stirnseiten des Hydraulikzylinders 6 ist jeweils eine Endlagendämpfung 13, 14 vorgesehen. Ein in der Mitte der Kolbenstange 8 befestigter Querstift 15 ist an seinem freien Ende mit einem Winkelschieber 16 verbunden, der oberhalb des Hydraulikzylinders 6 in einer Aufnahme 17 des Tragkörpers 2 längsverschiebbar angeordnet ist. Wie Fig. 3 zeigt, hat der Tragkörper 2 einen verbreiterten vorderen Bereich 20, einen schmalen Mittelbereich 21 und einen abgewinkelten und mit dem Ende des Tragarms 1 fest verbundenen hinteren Bereich 22. Im Tragkörpergehäuse 23 ist an der der Traghalterung 3 zugewandten Seite die Aufnahme 17 für den Winkelschieber 16 ausgespart. Diese Aufnahme 17 weist eine erste Führungsnut 24 und eine im schmalen mittleren Bereich 21 ausgebildete und parallel zur ersten Führungsnut 24 versetzte zweite Führungsnut 25 auf. Die beiden Führungsnuten 24, 25 sind durch einen verbreiterten Mittelteil 26 miteinander verbunden.

Der in der Aufnahme 17 angeordnete Winkelschieber 16 ist mit zwei parallel zueinander versetzten Führungsarmen 27, 28 in den Führungsnuten 24, 25 geführt. Der in der ersten Führungsnut 24 axial verschiebbare Führungsarm 27 weist an seinem Ende eine quer zur Verschieberichtung ausgerichtete Nut 30 auf, in der ein Gleitstein 31 verschiebbar geführt ist. Der Gleitstein 31 weist eine mittige Bohrung 33 auf, in die ein Verstellzapfen 32 eingreift, der an einem fest mit der Traghalterung 3 verschraubten Deckel 35 versetzt zur Schwenkachse 7 ausgebildet ist (vgl. Fig. 5). Der zweite Führungsarm 28 ist in der zweiten Führungsnut 25 geführt und hat eine Bohrung 36, in die der mit der Kolbenstange 8 verbundene Querstift 15 eingreift. Die beiden Führungsarme 27, 28 des Winkelschiebers 16 sind durch einen Mittelsteg 37 miteinander verbunden. An den Stirnseiten 38, 39 der ersten Führungsnut 24 sind im Tragkörpergehäuse 23 zwei Stellschrauben 41, 42 angeordnet, die eine Einstellung der Endlagen des Winkelschiebers 16 ermöglichen. Ein am Ende des unteren Führungsarms 28 seitlich angebrachter Schaltstift 43 betätigt in der jeweiligen Endstellung einen Schalter 44, 45.

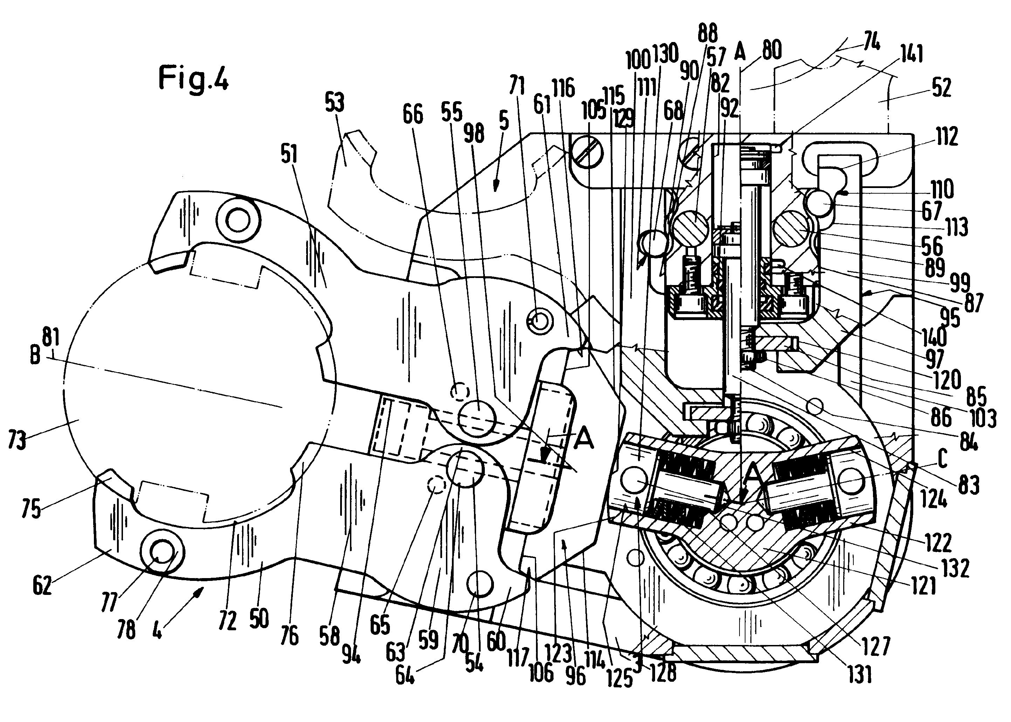

Wie Fig. 4 zeigt, sind in der Traghalterung 3 die beiden um etwa 80° gegeneinander versetzten Werkzeuggreifer 4, 5 mit je zwei Greiferarmen 50 bis 53 montiert. Jeder Greiferarm 50 bis 53 ist um je einen festen Lagerstift 54 bis 57 an der Traghalterung 3 verschwenkbar gelagert. Für jeden Werkzeuggreifer 4, 5 ist eine bestimmte Werkzeugwechselposition A und jeweils eine um den Schwenkwinkel nach rechts bzw. nach links versetzte Standby-Position B bzw. C vorgesehen. In Fig. 4 ist der momentan in der Wechselposition A befindliche Werkzeuggreifer 5 durch eine Strichpunkt-Linie und der Werkzeuggreifer 4 in der Standby-Stellung B durch eine durchgezogene Linie dargestellt.

Die Greiferarme 50 bis 53 sind gleich aufgebaut. Jeder Greiferarm weist einen Mittelteil 58 mit zwei zueinander parallelen Seitenflächen, einen bogenförmig nach beiden Seiten erweiterten hinteren Teil 59 mit einem Verriegelungsansatz 60 an seiner äußeren Endkante und ein schmales Vorderteil 62 in Form eines Ringsegments auf. In einem dem zweiten Greiferarm 51 zugewandten halbkreisförmigen Flächenansatz 63 des hinteren Teils 59 ist eine Bohrung 64 vorgesehen, in die der an der Traghalterung 3 befestigte Lagerstift 54 eingreift. Neben der Bohrung 64 ist an der Unterseite des Greiferarms 50 ein radial in Richtung des Mittelteils 58 versetzter, nach unten weisender Betätigungszapfen 65 angeordnet. Im hinteren Teil 59 im Bereich des Verriegelungsansatzes 60 ist ein nach oben ausgerichteterSchaltstift 70 befestigt. Der Radius der Innenseite 72 des ringsegmentförmigen Vorderteils 62 entspricht dem Radius der Werkzeugaufnahme 73. An den Enden des Vorderteils 62 sind an der Innenseite 72 zwei keilförmige Ansätze 75, 76 ausgebildet, die in der Schließstellung in eine an der Werkzeugaufnahme 73 ausgebildete Ringnut eingreifen. Im Vorderteil 62 ist ferner in einer Bohrung 77 eine nach oben ausgerichtete Zentriernase 78 montiert.

Der Betätigungsmechanismus beider Werkzeuggreifer 4, 5 ist gleich aufgebaut, so daß die Beschreibung des Betätigungsmechanismus für den Werkzeuggreifer 5 in gleicher Weise für den Werkzeuggreifer 4 gilt. Unterhalb des Werkzeuggreifers 5 ist in der Traghalterung 3 in Richtung der Achse 80 ein doppelt wirkender Hydraulikzylinder 82 angeordnet, dessen Kolben 83 nur in der Wechselposition A die beiden in Fig. 4 zu beiden Seiten der Achslinie 80 im Schnitt dargestellten Endlagen einnehmen kann. Am Ende des Kolbens 83 ist ein Gewindeansatz 84 ausgebildet, an dem eine Platte 85 mittels einer Mutter 86 befestigt ist. An zwei Seitenflächen 87, 88 eines den Hydraulikzylinder 82 bildenden Teils der Traghalterung 3 sind im Bereich der Lagerstifte 56, 57 wellenförmige Aussparungen 89, 90 eingebracht. Die Abdichtung des Hydraulikzylinders 82 und die Führung der Kolbenstange 83 erfolgt mittels einer stirnseitig angeschraubten Abschlußplatte 92. Der gleichartig aufgebaute und dem Stellglied 96 zugeordnete Hydraulikzylinder 94 ist in Fig. 4 mit einer gestrichelten Linie dargestellt.

Ferner ist in der Traghalterung 3 ein U-förmiges Stellglied 95 verschiebbar angeordnet, das einen Mittelsteg 97 und zwei seitlich angeformte Schenkel 99, 100 aufweist. Die beiden Schenkel 99, 100 sind unterhalb der Greiferarme 52, 53 in einer parallel zum Hydraulikzylinder 82 im Tragkörper 3 ausgebildeten Führung 103 längsverschiebbar geführt. Wie sich aus der Betrachtung der Mittelstege 97, 98 der beiden Betätigungsmechanismen ergibt, überragt jeder Mittelsteg 97, 98 seine beiden Schenkel 99, 100 bzw. 101, 102, so daß sich zwei den Greiferarmen gegenüberliegende Schultern 105, 106 ergeben. Am vorderen Ende der Schenkel 99, 100 ist jeweils eine nach innen offene Aussparung 110, 111 vorgesehen, die einen ersten bogenförmig nach außen erweiterten Abschnitt 112 und einen längs der Schenkel 99, 100 angeordneten schmaleren zweiten Abschnitt 113 aufweist. Wie in Fig. 4 dargestellt, weist der Mittelsteg 97, 98 zwei schräge Seitenflächen 114, 115 auf, an die in seinem oberen Bereich zwei schräge Verriegelungsflächen 116, 117 unter Ausbildung einer Ecke anschließen. Zusätzlich befindet sich im Mittelsteg 97, 98 eine senkrecht zur Verstellrichtung ausgerichtete Ausnehmung 120, in welche die mit dem Kolben 83 verbundene Platte 85 mit einem axialen Spiel δ eingreift (siehe Fig. 6).

Wie in Fig. 4 gezeigt, sind am Bolzen 121 zwei in Richtung der beiden möglichen Standby-Stellungen B und C ausgerichtete und um den doppelten Schwenkwinkel gegeneinander versetzte Ansätze 122, 123 ausgebildet, die in Richtung zur Bolzenmitte ausgerichtete Bohrungen 124, 125 aufweisen. Gemäß Fig. 6 ist am inneren Ende der Bohrung 125 eine weitere Bohrung 126 mit einem kleineren Durchmesser vorgesehen, in welche ein stiftförmiger Ansatz 127 eines Haltebolzens 128 eingreift. Das an seinem freien Ende mit einer Rundung 129 versehene Vorderteil 130 des Haltebolzens 128 ist in der Bohrung 125 längsverschiebbar geführt. Ein im hinteren Teil der Bohrung 125 gehaltenes Federpaket 131 drückt den Haltebolzen 128 gegen die Stirnfläche des Mittelstegs 98. Im Vorderteil 130 des Haltebolzens 128 ist quer zur Verschieberichtung ein Fixierstift 132 eingepreßt, der in eine Querbohrung 133 am Ansatz 123 eingreift und so ein Herausfallen des Haltebolzens 128 während der Schwenkbewegung der Traghalterung 3 verhindert. Weiterhin ist am freien Ende des Ansatzes 123 unterhalb des Haltebolzens 128 ein Anschlag 134 vorgesehen. Der für den Ansatz 123 beschriebene Aufbau gilt in gleicher Weise für den Ansatz 122.

Die Druckmittelversorgung des Hydraulikzylinders 82 erfolgt über in der Traghalterung 3 angeordnete Bohrungen 140, 141. Die Bohrung 140 und die - in Fig. 4 nicht dargestellte - Bohrung des zweiten Hydraulikzylinders sind gemeinsam an einen ersten Ringkanal 142 angeschlossen. Die Bohrung 141 und die entsprechende - ebenfalls in Fig. 4 nicht dargestellte - Bohrung für den zweiten Hydraulikzylinder sind gemeinsam an einen zweiten Ringkanal 143 im Tragkörper 3 angeschlossen. Wie in Fig. 5 gezeigt, münden in die Ringkanäle 142, 143 im Bolzen 2 verlaufende Druckmittelkanäle 144, 145 ein, so daß in jeder Verdrehstellung eine Druckmittelversorgung gewährleistet ist.

Der vorstehend beschriebene Werkzeugwechsler arbeitet wie folgt:

Für einen Werkzeugwechselvorgang an der Arbeitsspindel sei vorausgesetzt, daß der Werkzeuggreifer 5 des in Fig. 4 dargestellten Werkzeugwechslers vollständig geöffnet und so auf die Arbeitsspindel zentriert ist, daß ein Greifen der in der Arbeitsspindel geklemmten Werkzeugaufnahme 74 möglich ist. In dieser Stellung befindet sich im Werkzeuggreifer 4 bereits die vorher aus dem Magazin entnommene Werkzeugaufnahme 73 mit dem neuen Werkzeug. Die sichere Halterung der Werkzeugaufnahme wird durch eine auf den Werkzeuggreifer 4 wirkende Klemmung erreicht, wobei der federbelastete Haltebolzen 128 die am Stellglied 96 ausgebildeten schrägen Verriegelungsflächen 116, 117 gegen die Verriegelungsansätze 60, 61 an den Greiferarmen 50, 51 drückt. Dabei sind die Greiferarme 50, 51 um die festen Lagerstifte 54, 55 nach innen geschwenkt und üben somit eine Klemmkraft auf die Werkzeugaufnahme 73 aus.

Zum Schließen des Werkzeuggreifers 5 wird der Hydraulikzylinder 82 über den Ringkanal 142 und die Bohrung 145 mit Druck beaufschlagt, so daß eine Einziehbewegung der Kolbenstange 83 und damit eine Axialverschiebung des Stellglieds 95 aus der in Fig. 4 links von der Achslinie 80 dargestellten Position in die rechtsseitig eingefahrene Stellung erfolgt. Die an den Greiferarmen 52, 53 ausgebildeten Betätigungszapfen 67, 68 greifen mit ihren Seitenflächen gleichzeitig in die an den Schenkeln 99, 100 vorgesehenen Aussparungen 110, 111 und in die wellenförmigen Aussparungen 89, 90 an der Traghalterung 3 ein. Bei der Verschiebung des Stellglieds 95 aus der in der linken Schnittdarstellung gezeigten Öffnungsstellung in die in der rechten Schnittdarstellung gezeigte Klemmstellung vollführen die Betätigungszapfen 67, 68 eine Kreisbewegung entlang der wellenförmigen Aussparungen 89, 90. Diese Bewegung bewirkt ein Verschwenken der Greiferarme 52, 53 aus der geöffneten in die geschlossene Lage. Der dem Werkzeuggreifer 4 zugeordnete Hydraulikzylinder 94 ist gleichzeitig mit einem Druck in Klemmrichtung beaufschlagt, so daß vor dem Verschwenken der Werkzeuge beide Werkzeuggreifer 4, 5 gleichzeitig geklemmt sind.

Nach dem Lösen der Spannmittel für die Werkzeugaufnahme in der Arbeitsspindel erfolgt ein Zurückfahren des Werkzeugwechslers und die Werkzeugaufnahme 74 wird mit dem Werkzeug aus der Arbeitsspindel herausgezogen.

Durch Druckbeaufschlagung des Hydraulikzylinders 8 wird der Winkelschieber 16 axial verschoben, um die Traghalterung 3 um ihre Schwenkachse 7 zu verdrehen, wobei der in der Standby-Position B befindliche Werkzeuggreifer 4 in die Werkzeugwechselposition A und gleichzeitig der Werkzeuggreifer 5 mit dem alten Werkzeug in die Standby-Position C übergeht. Die Verdrehung der Traghalterung 3 und damit der Werkzeuggreifer 4, 5 erfolgt durch Verschieben des Winkelschiebers 16, dessen oberer Führungsarm 27 durch den Gleitstein 31 und den Verstellzapfen 32 mit der Traghalterung 3 wirkungsmäßig verbunden ist.

Nachdem der Werkzeuggreifer 4 mit dem neuen Werkzeug in die Werkzeugwechselposition A verschwenkt ist, wird die Werkzeugaufnahme 73 durch Zurückbewegen des Werkzeugwechslers in die Arbeitsspindel eingeschoben und dort geklemmt.

Zum Öffnen des Werkzeuggreifers 4 in der Werkzeugwechselposition A werden die Hydraulikzylinder 82, 94 beider Werkzeuggreifer 4, 5gleichzeitig über den Ringkanal und die Bohrung in Öffnungsrichtung mit Druck beaufschlagt.

Wird der Hydraulikzylinder des in Standby-Position befindlichen Werkzeuggreifers 5 in Öffnungsrichtung mit Druck beaufschlagt, fährt das Kolbenstangenende innerhalb des zwischen der Platte 85 und der Ausnehmung 120 im Stellglied 95 ausgebildeten Spiels gegen den am Ansatz 123 unterhalb des Haltebolzens 128 vorgesehenen Anschlag 134. Da der Gewindeansatz 84 bereits am Anschlag 134 anschlägt, bevor das Spiel δ überwunden ist, wird das Stellglied 96 von dem Kolben 83 nicht bewegt, so daß der federbelastete Haltebolzen 128 weiterhin gegen das Stellglied 95 drückt und so die Klemmwirkung erhalten bleibt. Gleichzeitig werden die Greiferarme 50, 51 des jetzt in Wechselposition A befindlichen Werkzeuggreifers 4 geöffnet. Durch die beschriebene Außenkontur der Werkzeuggreifer wird eine vollständige Öffnung der Werkzeuggreifer ermöglicht, wobei die Enden der Werkzeuggreifer mit der Abschlußkante der Traghalterung fluchten. Auf diese Weise werden Kollisionen mit zu bearbeitenden Werkstücken bzw. Maschinenteilen vermieden.

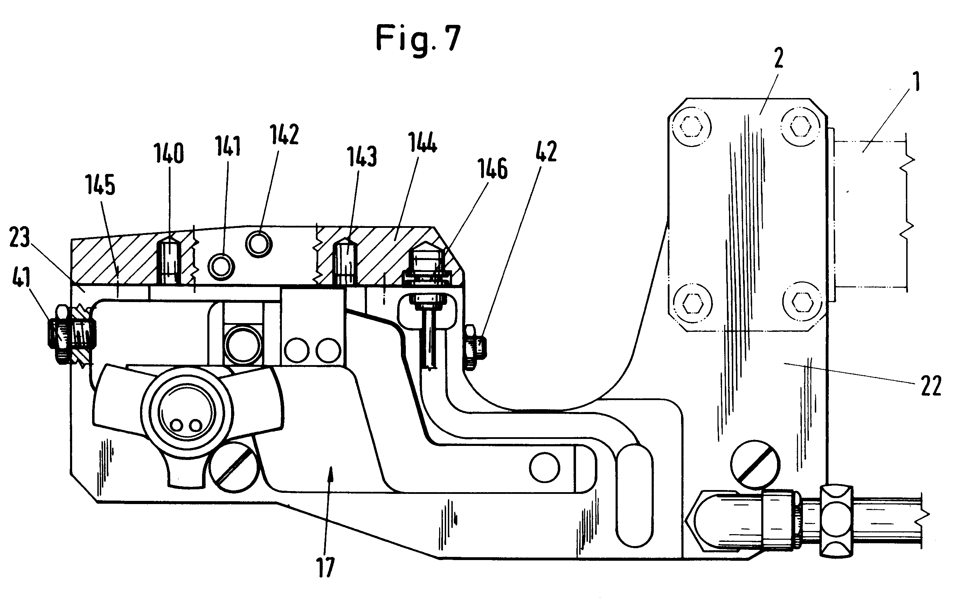

Der in Fig. 7 dargestellte Tragkörper entspricht weitgehend der Ausführung nach Fig. 3, so daß die jeweils übereinstimmenden Bauteile auch mit gleichen Bezugszeichen versehen sind. Während jedoch bei der Ausführung nach Fig. 3 die Endschalter in einem seitlichen Teil des Tragkörpergehäuses 23 gesondert eingebaut sind, befinden sich bei der Ausführung nach Fig. 7 insgesamt vier Endschalter 140 bis 143 in einem gesonderten, geschlossenen Gehäuse 144, das seitlich am Tragkörpergehäuse 23, z.B. mittels Schrauben 145 befestigt wird. Der elektrische Anschluß der Endschalter 140 bis 143 zu den jeweiligen Betätigungselementen erfolgt über einen Mehrphasenstecker 146. Der Vorteil dieser Variante liegt in der einfachen Austauschmöglichkeit der empfindlichen Endschalter.

## Patentansprüche

1. Werkzeugwechsler für programmgesteuerte Werkzeugmaschinen, mit
- einer Transportvorrichtung (1, 2) zum Überführen ausgewählter Werkzeuge zwischen einem Werkzeugmagazin und einer Arbeitsspindel der Werkzeugmaschine und
- zwei um einen vorgegebenen Schwenkwinkel versetzten Werkzeuggreifern (4; 5), die in einer an der Transportvorrichtung (1, 2) montierten Traghalterung (3) angeordnet und zwischen einer Wechselstellung und mindestens einer Standby-Stellung verschwenkbar sind, wobei jeder Werkzeuggreifer (4; 5) ein Paar Greiferarme (50, 51; 52, 53) aufweist, das von je einem Hydraulikzylinder (82, 83; 93, 94) über ein Stellglied (95; 96) betatigbar ist,
dadurch gekennzeichnet,
- daß die Hydraulikzylinder (82, 83; 93, 94) eine gemeinsame Druckmittelzufuhr (140-145) zur gleichzeitigen Ansteuerung aufweisen,
- daß jedem in Standby-Stellung befindlichen Werkzeuggreifer (4; 5) eine Verriegelungsvorrichtung (28, 134) zugeordnet ist, die ein federbelastetes Druckstück (128) aufweist, welches das an der Kolbenstange (83; 93) des Hydraulikzylinders (82, 83; 93, 94) mit einem vorgegebenen Spiel (δ) gehaltene Stellglied (95; 96) des in Standby-Stellung befindlichen Werkzeuggreifers (4; 5) gegen Verriegelungsansätze (60, 61) an den Greiferarmen (50, 51; 52, 53) anpreßt, und
- daß die Verriegelungsvorrichtung (28, 134) einen Anschlag (134) aufweist, der die Kolbenstange (83; 93) des in Standby-Position befindlichen Werkzeuggreifers (4; 5) nach einer kurzen Ausfahrbewegung innerhalb des Spiels (δ) blokkiert.

2. Werkzeugwechsler nach Anspruch 1, dadurch gekennzeichnet, daß das Stellglied (95; 96) einen Mittelsteg (97; 98) und zwei seitlich angeformte Schenkel (99, 100) aufweist, welche in einer parallel zum Hydraulikzylinder (82; 94) im Tragkörper (3) angeordneten Führung (103) längsverschiebbar geführt sind.

3. Werkzeugwechsler nach Anspruch 2, dadurch gekennzeichnet, daß an den Schenkeln (99, 100) des Stellglieds (95; 96) Aussparungen (110, 111) vorgesehen sind, in die Betätigungszapfen (65, 66; 67, 68) eingreifen, die an der Unterseite der um einen festen Lagerstift (54, 55; 56, 57) verschwenkbaren Greiferarme (50, 51; 52, 53) ausgebildet sind.

4. Werkzeugwechsler nach einem der Ansprüche 1-3, dadurch gekennzeichnet, daß am Stellglied (95; 96) schräge Verriegelungsflächen (116, 117) ausgebildet sind, die bei geschlossenen Greiferarmen in Eingriff mit den Verriegelungsansätzen (60, 61) stehen.

5. Werkzeugwechlser nach einem der Ansprüche 1-4, dadurch gekennzeichnet, daß die Traghalterung (3) auf einem Bolzen (121) drehbar gelagert ist, der an einem Tragkörper (2) der Transportvorrichtung (1, 2) befestigt ist.

6. Werkzeugwechsler nach Anspruch 5, dadurch gekennzeichnet, daß der Bolzen (121) zwei um den doppelten Schwenkwinkel gegeneinander versetzte und in Richtung der Standby-Stellungen (B, C) ausgerichtete Ansätze (122, 123) aufweist, in denen Bohrungen (124, 125) zur Aufnahme der durch je ein Federpaket (131) vorgespannten bolzenförmigen Druckstücke (128) vorgesehen sind.

7. Werkzeugwechsler nach einem der vorhergehenden Ansprüche, dadurch gekennzeichnet, daß die Druckmittelzufuhr zu den Hydraulikzylindern (82, 83; 93, 94) über in der Traghalterung (3) angeordnete Bohrungen (140, 141) erfolgt, die mit zwei in der Traghalterung (3) ausgebildeten Ringnuten (142, 143) verbunden sind, in welche zwei im Bolzen (121) angeordnete Druckmittelkanäle (144, 145) einmünden.

8. Werkzeugwechsler nach einem der vorhergehenden Ansprüche, dadurch gekennzeichnet, daß auf einem fest an der Traghalterung (3) montierten Deckel (35) ein parallel zur Schwenkachse (7) versetzter Verstellzapfen (32) angeordnet ist, an welchem ein Schwenkantrieb (8, 15, 16) eingreift.

9. Werkzeugwechsler nach Anspruch 8, dadurch gekennzeichnet, daß der Schwenkantrieb (8, 15, 16) ein von einem Hydraulikzylinder (8) betätigter Winkelschieber (16) ist, welcher durch einen in einer Quernut (30) des Winkelschiebers (16) geführten Gleitstein (31) und den Verstellzapfen (32) mit der Traghalterung (3) verbunden ist.

10. Werkzeugwechsler nach einem der Ansprüche 1-9, dadurch gekennzeichnet, daß am Tragkörper (2) der Transportvorrichtung (1, 2) ein gesondertes Bauteil (144) montiert ist, in dem Endschalter (140-143) geschützt angeordnet sind und das über einen Mehrphasenstecker (146) für den elektrischen Anschluß der Endschalter (140-143) an die zugehörigen Betätigungselemente verfügt.

## Claims

1. A tool changer for program-controlled machine tools comprising:
- a conveyor device (1, 2) for transferring selected tools between a tool magazine and a work spindle of the machine tool and
- two tool grippers (4; 5) offset by a predetermined pivoting angle and disposed in a support mounting (3) on the conveyor device (1, 2) and pivotable between a tool changing position and at least one stand-by position, each tool gripper (4; 5) comprising a pair of gripper arms (50, 51; 52, 53) each adapted to be actuated by a hydraulic cylinder (82, 83; 93, 94) via an adjusting element (95; 96),
characterised in that
- the hydraulic cylinders (82, 83; 93, 94) have a common pressure medium supply (140 - 145) for simultaneous control,
- in that there is associated with each tool gripper (4; 5) in the stand-by position a locking device (28, 134) comprising a spring-loaded pressure member (128) which presses against locking projections (60, 61) on the gripper arms (50, 51; 52, 53) that adjusting element (95; 96) of the tool gripper (4; 5) in the stand-by position which is held against the piston rod (83; 93) of the hydraulic cylinder (82, 83; 93, 94) with a predetermined clearance (δ), and
- in that the locking device (28, 134) comprises a stop (134) which after a short extension movement within the clearance (δ) locks the piston rod (83; 93) of the tool gripper (4; 5) in the stand-by position

2. A tool changer according to claim 1, characterised in that the adjusting element (95; 96) comprises a central web (97; 98) and two laterally integrally formed limbs (99, 100) guided for longitudinal displacement in a guide (103) disposed in the support member (3) in parallel relationship to the hydraulic cylinder (82; 94).

3. A tool changer according to claim 2, characterised in that recesses (110, 111) are formed on the limbs (99, 100) of the adjusting element (95; 96) and in them engage actuating pins (65, 66; 67, 68) formed on the underside of the gripper arms (50, 51; 52, 53) pivotable about a fixed pivot pin (54, 55; 56, 57).

4. A tool changer according to any one of claims 1 to 3, characterised in that inclined locking surfaces (116, 117) are formed on the adjusting element (95; 96) and engage the locking projections (60, 61) when the gripper arms are closed.

5. A tool changer according to any one of claims 1 to 4, characterised in that the support mounting (3) is mounted for rotation on a pin (121) fixed on a support member (2) of the conveyor device (1, 2).

6. A tool changer according to claim 5, characterised in that the pin (121) comprises two projections (122, 123) offset from one another by an amount equal to twice the pivoting angle and aligned in the direction of the stand-by positions (B, C), said projections being formed with bores (124, 125) to receive the pressure elements (128) in the form of pins each biased by a spring assembly (131).

7. A tool changer according to any one of the preceding claims, characterised in that the pressure medium supply to the hydraulic cylinders (82, 83; 93, 94) is effected by way of bores (140, 141) disposed in the support mounting (3), said bores being connected to two annular grooves (142, 143) formed in the support mounting (3), two pressure medium ducts (144, 145) in the pin (121) leading into said annular grooves (142, 143).

8. A tool changer according to any one of the preceding claims, characterised in that an adjusting pin (32) offset in parallel relationship to the pivot axis (7) is disposed on a cover (35) rigidly mounted on the support mounting (3) and is engaged by a pivot drive (8, 15, 16).

9. A tool changer according to claim 8, characterised in that the pivot drive (8, 15, 16) is an angular slide (16) which is actuated by a hydraulic cylinder (8) and which is connected to the support mounting (3) by the adjusting pin (32) and by a slide block (31) guided in a transverse groove (30) in the slide (16).

10. A tool changer according to any one of claims 1 to 9, characterised in that a separate component (144) is mounted on the support member (2) of the conveyor device (1, 2) and contains the limit switches (140 - 143) in a protected arrangement and provides the electrical connection between the limit switches (140 - 143) and the associated actuating elements via a multiphase plug (146).

## Revendications

1. Changeur d'outils pour machines-outils à commande programmable, comportant
- un dispositif de transport (1, 2) pour transférer des outils sélectionnés, entre un magasin d'outils et une broche de travail de la machine-outil, et
- deux pinces de préhension d'outils (4; 5) décalées d'un angle de pivotement prédéterminé, qui sont disposées dans un support de maintien (3) monté sur le dispositif de transport (1, 2), et qui peuvent pivoter entre une position d'échange et au moins une position d'attente, chaque pince de préhension d'outils (4; 5) comportant une paire de bras de préhension (50, 51; 52, 53), dont chacune peut être actionnée par un vérin hydraulique (82, 83; 93, 94), par l'intermédiaire d'un organe d'actionnement (95; 96),
caractérisé
- en ce que les vérins hydrauliques (82, 83; 93, 94) présentent une alimentation commune en fluide de pression (140 - 145) en vue d'une commande simultanée,
- en ce qu'à chaque pince de préhension d'outils (4; 5) se trouvant en position d'attente, est associé un dispositif de verrouillage (28, 134) comportant une pièce de pression (128) sollicitée par ressort, qui presse l'organe d'actionnement (95; 96) de la pince de préhension d'outils (4; 5) se trouvant en position d'attente, maintenu sur la tige de piston (83; 93) du vérin hydraulique (82, 83; 93, 94) avec un jeu (δ) prédéterminé, contre des embases de verrouillage (60, 61) sur les bras de préhension (50, 51; 52, 53), et
- en ce que le dispositif de verrouillage (128, 134) comporte une butée (134) qui bloque la tige de piston (83; 93) de la pince de préhension d'outils (4; 5) se trouvant en position d'attente, après un court mouvement de sortie, à l'intérieur du jeu (δ).

2. Changeur d'outils selon la revendication 1, caractérisé en ce que l'organe d'actionnement (95; 96) comporte une nervure centrale (97; 98) sur laquelle sont formées latéralement deux branches (99, 100), qui sont guidées en coulissement longitudinal, dans un guidage (103) disposé dans le support de maintien (3), parallèlement au vérin hydraulique (82; 94).

3. Changeur d'outils selon la revendication 2, caractérisé en ce que sur les branches (99, 100) de l'organe d'actionnement (95; 96), sont prévues des encoches (110, 111) dans lesquelles s'engagent des tenons d'actionnement (65, 66; 67, 68) qui sont formés sur le côté inférieur des bras de préhension (50, 51; 52, 53) pouvant pivoter autour d'un axe de palier fixe (54, 55; 56, 57).

4. Changeur d'outils selon l'une des revendications 1 à 3, caractérisé en ce que sur l'organe d'actionnement (95; 96) sont réalisées des surfaces de verrouillage (116, 117) inclinées, qui, lorsque les bras de préhension sont fermés, sont en prise avec les embases de verrouillage (60, 61).

5. Changeur d'outils selon l'une des revendications 1 à 4, caractérisé en ce que le support de maintien (3) est monté tournant sur une broche (121), qui est fixée sur un corps de support (2) du dispositif de transport (1, 2).

6. Changeur d'outils selon la revendication 5, caractérisé en ce que la broche (121) comporte deux embases (122, 123) qui sont décalées l'une par rapport à l'autre d'une valeur égale au double de l'angle de pivotement, qui sont orientées dans la direction des positions d'attente (B, C), et dans lesquelles sont prévus des alésages (124, 125) destinés à recevoir les pièces de pression (128) en forme broche et précontraintes chacune par un groupe de ressorts (131).

7. Changeur d'outils selon l'une des revendications précédentes, caractérisé en ce que l'alimentation en fluide de pression des vérins hydrauliques (82, 83; 93, 94) s'effectue par l'intermédiaire de perçages (140, 141) qui sont disposés dans le support de maintien (3), et qui sont reliés à deux rainures annulaires (142, 143) réalisées dans le support de maintien (3) et dans lesquelles débouchent deux canaux de fluide de pression (144, 145) agencés dans la broche (121).

8. Changeur d'outils selon l'une des revendications précédentes, caractérisé en ce que sur un couvercle (35) monté fixe sur le support de maintien (3), est disposé un tourillon d'actionnement (32) décalé parallèlement à l'axe de pivotement (7), et sur lequel agit un mécanisme d'entraînement de pivotement (8, 15, 16).

9. Changeur d'outils selon la revendication 8, caractérisé en ce que le mécanisme d'entraînement de pivotement (8, 15, 16) est une coulisse coudée (16), qui est actionnée par un vérin hydraulique (8), et qui est reliée au support de maintien (3) par l'intermédiaire du tourillon d'actionnement (32) et d'un patin coulissant (31) guidé dans une rainure transversale (30) de la coulisse (16).

10. Changeur d'outils selon l'une des revendications 1 à 9, caractérisé en ce que sur le corps de support (2) du dispositif de transport (1, 2), est montée une pièce distincte (144) dans laquelle sont disposés de manière protégée, des contacteurs de fin de course (140 - 143), et qui dispose d'un connecteur polyphasé (146) pour le branchement électrique des contacteurs de fin de course (140 - 143) aux éléments d'actionnement associés.
